# DEMANDE DE BREVET EUROPEEN

(11) **EP 4 340 292 A1**
(43) Date de publication de la demande: **20.03.2024**
(21) Numéro de dépôt: 23197334.8
(22) Date de dépôt: 14.09.2023
(51) Int. Cl.: H04L 9/08

(54) **ADAPTATION DYNAMIQUE DU FORMAT DE TRANSMISSION D'UN CHIFFREMENT DE DONNÉES BASÉ SUR LES ATTRIBUTS**

(30) Priorité: 14.09.2022 FR 2209244
(71) Demandeur: THALES, 92190 Meudon (FR)
(72) Inventeur: WIOREK, Jean-François, 92622 GENNEVILLIERS CEDEX (FR); DUPUTZ, Patrick, 92622 GENNEVILLIERS CEDEX (FR)
(74) Mandataire: Lavoix

(57) **Abrégé**

L'invention concerne un procédé (10) d'adaptation dynamique du format de transmission d'un chiffrement de données basé sur les attributs, comprenant les étapes suivantes à appliquer à chaque ensemble de donnée(s) préalablement chiffré :
- séparation (12) dudit ensemble de donnée(s), en deux parties distinctes comprenant :
- une première partie comprenant une en-tête correspondant au chiffrement basé sur les attributs d'une clé de chiffrement symétrique ;
- une seconde partie comprenant lesdites données chiffrées avec ladite clé symétrique ; ladite séparation comprenant également l'association à chacune desdites deux parties d'un identifiant commun de ladite clé de chiffrement symétrique ;

- désynchronisation (14) de la transmission desdites deux parties distinctes ;
- réutilisation (16) de ladite clé de chiffrement symétrique pour une pluralité d'ensembles de donnée(s) préalablement chiffrés distinctement en utilisant des clés distinctes de chiffrement d'origine.

## Description

La présente invention concerne un procédé d'adaptation dynamique du format de transmission d'un chiffrement de données basé sur les attributs.

L'invention concerne également un programme d'ordinateur comportant des instructions logicielles qui, lorsqu'elles sont exécutées par un ordinateur mettent en oeuvre un tel procédé d'adaptation dynamique du format de transmission d'un chiffrement de données basé sur les attributs.

L'invention concerne également un dispositif d'adaptation dynamique du format de transmission d'un chiffrement de données basé sur les attributs.

Dans le domaine de la gestion de données, tel que par exemple dans le contrôle de la divulgation de données aux sensibilités variées, différentes approches sont envisageables.

De façon classique, il est connu de limiter l'accès aux données par le contrôle de l'accès aux supports des données. Ainsi, le contrôle de l'accès aux données d'une sensibilité déterminée est mis en oeuvre par un contrôle de l'accès au support contenant ou transportant ces données. A ce titre, on connait par exemple des réseaux de différents niveaux de confidentialité, contenant des données de différentes confidentialités, le contrôle de l'accès aux données étant effectué en contrôlant l'accès aux différents réseaux.

Un tel mode de contrôle de l'accès aux données ne donne toutefois pas entière satisfaction dans la mesure où le contrôle de l'accès aux données est effectué de manière indirecte. Aucune mesure ne permet en effet de limiter l'accès aux données si ces données échappent à un support dont l'accès est contrôlé.

A cet effet, une approche centrée sur les données en tant que telles a récemment été développée. Cette approche, connue sous le nom de DCS (de l'anglais « *Data Centric Security* ») vise notamment à associer des labels aux données afin de caractériser la sensibilité des données directement au niveau des données et non seulement au niveau des supports de données.

Selon cette approche il est notamment nécessaire de chiffrer et d'apposer le label sur la donnée associée via un mécanisme de chiffrement basé sur les attributs. Un tel chiffrement basé sur les attributs est par exemple un chiffrement ABE de l'anglais « *Attribute Based Encryption* »*.*

La taille des clés de chiffrement basé sur les attributs, notamment du chiffrement ABE précité, dépend du nombre d'attributs inclus dans le label d'une donnée. Plus le label possède de valeurs d'attributs, plus la taille de la clé associée est importante, ce qui impacte fortement la taille du fichier chiffré résultant, notamment de plusieurs kilo-octets (ko) selon l'algorithme de chiffrement utilisé voire une expansion de la taille des données par deux ou par trois voire plus selon la taille des fichiers sources, ces fichiers sources étant de petite taille (i.e. inférieure à trois kilo-octets (ko)).

Un tel impact d'augmentation de taille de fichier est cependant peu adapté à l'utilisation de réseaux contraints disposant par définition d'un niveau limité de ressources et par conséquent d'un faible débit.

En effet l'avantage fonctionnel du chiffrement basé sur les attributs, notamment du chiffrement ABE précité, se trouve confronté à l'allongement de la durée de transmission et/ou à la réduction de la bande passante utile, du fait de l'augmentation importante de la taille des données chiffrées par un tel chiffrement.

Un tel inconvénient est d'autant plus critique pour la protection de petits fichiers, et pour la protection des échanges via des réseaux de communication contraints à faible débit.

Un des buts de l'invention est alors de proposer une solution d'adaptation du chiffrement basé sur les attributs, notamment du chiffrement ABE précité, dédiée aux réseaux contraints, présentant notamment de faibles débits.

A cet effet, l'invention a pour objet un procédé d'adaptation dynamique du format de transmission d'un chiffrement de données basé sur les attributs, le procédé étant mis en oeuvre par un dispositif électronique d'adaptation dynamique du format de transmission d'un chiffrement de données basé sur les attributs, et comprenant les étapes suivantes à appliquer à chaque ensemble de donnée(s) préalablement chiffré au moyen dudit chiffrement basé sur les attributs :
- séparation dudit ensemble de donnée(s), préalablement chiffré, en deux parties distinctes comprenant :
   - une première partie comprenant une en-tête dudit ensemble de donnée(s) préalablement chiffré, l'en-tête correspondant au chiffrement basé sur les attributs d'une clé de chiffrement symétrique ;
   - une seconde partie comprenant lesdites données chiffrées avec ladite clé symétrique ; ladite séparation comprenant en outre l'association à chacune desdites deux parties distinctes d'un identifiant commun de ladite clé de chiffrement symétrique ;
- désynchronisation de la transmission desdites deux parties distinctes ;
- réutilisation de ladite clé de chiffrement symétrique pour une pluralité d'ensembles de donnée(s) préalablement chiffrés distinctement en utilisant des clés distinctes de chiffrement d'origine.

La mise en oeuvre d'un tel procédé d'adaptation dynamique du format de transmission d'un chiffrement de données basé sur les attributs est particulièrement avantageuse, pour des réseaux contraints à faible débits, du fait qu'elle permet d'optimiser la taille des données protégées par un chiffrement basé sur les attributs, notamment par le chiffrement ABE précité, en adaptant avant transmission la structure des fichiers protégés par un tel chiffrement basé sur les attributs pour optimiser leur transmission sur les réseaux contraints.

Une telle adaptation est rendue possible par le fait que le chiffrement, notamment ABE, en tant que tel est basé sur les attributs.

En effet, la présente invention consiste à utiliser les propriétés de chiffrement basé sur les attributs, tel que l'ABE, pour mettre en place un mécanisme d'optimisation spécifique à ce type de chiffrement. Les clés de chiffrement basé sur les attributs sont diversifiées en fonction des attributs à partir desquels elles sont exploitées. Dans le cadre d'une utilisation opérationnelle, la combinatoire des attributs utilisés est réduite. En se basant sur cette constatation et les propriétés du chiffrement basé sur les attributs, un mécanisme d'optimisation est mis en place selon la présente invention en mettant en oeuvre les étapes précitées à savoir la séparation, la désynchronisation et la réutilisation qui seront décrites en détail par la suite.

Suivant d'autres aspects avantageux de l'invention, le procédé d'adaptation dynamique du format de transmission d'un chiffrement de données basé sur les attributs comprend une ou plusieurs des caractéristiques suivantes, prises isolément ou suivant toutes les combinaisons techniquement possibles :
- ledit chiffrement de données basé sur les attributs est un chiffrement ABE ;
- ladite désynchronisation consiste à transmettre séparément ladite première partie :
   - avant ou après ladite seconde partie ; ou
   - sur requête d'un récepteur; ou
   - périodiquement ;
- la réutilisation de ladite clé de chiffrement symétrique pour une pluralité d'ensembles de donnée(s) préalablement chiffrés distinctement comprend un transchiffrement de ladite pluralité d'ensembles de donnée(s) avec ladite clé de chiffrement symétrique ;
- ladite étape de transchiffrement comprend en outre une compression de données de ladite seconde partie ;
- la réutilisation de ladite clé de chiffrement symétrique pour une pluralité d'ensembles de donnée(s) préalablement chiffrés distinctement comprend :
   - le chiffrement, avec ladite clé de chiffrement symétrique, de la clé de chiffrement d'origine associée à chaque ensemble de ladite pluralité d'ensembles de donnée(s) préalablement chiffrés distinctement en utilisant des clés distinctes de chiffrement d'origine ; et
   - ajout de ladite clé de chiffrement d'origine chiffrée par ladite clé de chiffrement symétrique au sein de ladite seconde partie.
- le procédé comprend en outre une étape de renouvellement de ladite clé de chiffrement symétrique, ledit renouvellement étant propre à être :
   - périodique ;
   - mis en oeuvre en fonction de la durée et/ou de la quantité de données à transmettre associée à ladite pluralité d'ensembles de donnée(s) préalablement chiffrés distinctement en utilisant des clés distinctes de chiffrement d'origine.
- le procédé comprend en outre une étape préalable de surchiffrement desdites clés distinctes de chiffrement d'origine.

L'invention a également pour objet un programme d'ordinateur comportant des instructions logicielles qui, lorsqu'elles sont exécutées par un ordinateur, mettent en oeuvre un tel procédé d'adaptation dynamique du format de transmission d'un chiffrement de données basé sur les attributs tel que défini ci-dessus.

L'invention a également pour objet un dispositif d'adaptation dynamique du format de transmission d'un chiffrement de données basé sur les attributs, et pour application à chaque ensemble de donnée(s) préalablement chiffré au moyen dudit chiffrement basé sur les attributs, le dispositif comprenant :
- un module de séparation configuré pour séparer ledit ensemble de donnée(s), préalablement chiffré, en deux parties distinctes comprenant :
   - une première partie comprenant une en-tête dudit ensemble de donnée(s) préalablement chiffré, l'en-tête correspondant au chiffrement basé sur les attributs d'une clé de chiffrement symétrique ;
   - une seconde partie comprenant lesdites données chiffrées avec ladite clé symétrique; ledit module de séparation étant en outre configuré pour associer à chacune desdites deux parties distinctes d'un identifiant commun de ladite clé de chiffrement symétrique ;
- un module de désynchronisation configuré pour désynchroniser la transmission desdites deux parties distinctes ;
- un module de réutilisation configuré pour réutiliser ladite clé de chiffrement symétrique pour une pluralité d'ensembles de donnée(s) préalablement chiffrés distinctement en utilisant des clés distinctes de chiffrement.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig 1****]** la figure 1 est un organigramme représentatif d'un procédé d'adaptation dynamique du format d'un chiffrement basé sur les attributs selon la présente invention ;
- **[****Fig 2****]** la figure 2 illustre l'effet de la première étape du procédé de la figure 1 ;
- **[****Fig 3****]** la figure 3 illustre l'effet de la deuxième étape du procédé de la figure 1 ;
- **[****Fig 4****]** la figure 4 illustre l'effet de la troisième étape du procédé de la figure 1 ;
- **[****Fig 5****] [****Fig 6****]** les figures 5 et 6 illustrent plus en détail deux variantes de mise en oeuvre de la troisième étape du procédé selon la présente invention.

Par la suite, par « attribut », on entend une valeur définie, selon une politique de labellisation prédéterminée, pour caractériser la sensibilité d'une donnée.

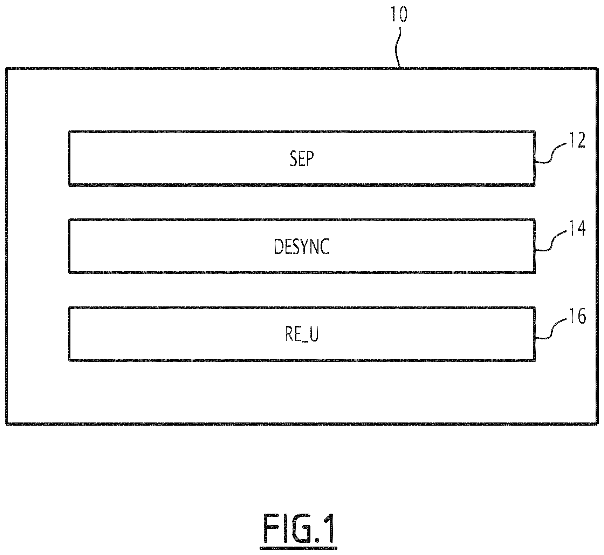

La figure 1 est un organigramme représentatif d'un procédé 10 d'adaptation dynamique du format de transmission d'un chiffrement de données basé sur les attributs selon la présente invention, le procédé étant mis en oeuvre par un dispositif électronique d'adaptation dynamique du format de transmission d'un chiffrement de données basé sur les attributs, et comprenant les étapes suivantes à appliquer à chaque ensemble de donnée(s) préalablement chiffré au moyen dudit chiffrement basé sur les attributs :
- séparation 12 dudit ensemble de donnée(s), préalablement chiffré, en deux parties distinctes comprenant :
   - une première partie comprenant une en-tête dudit ensemble de donnée(s) préalablement chiffré, l'en-tête correspondant au chiffrement basé sur les attributs d'une clé de chiffrement symétrique ;
   - une seconde partie comprenant lesdites données chiffrées avec ladite clé symétrique ; ladite séparation 12 comprenant en outre l'association à chacune desdites deux parties distinctes d'un identifiant commun de ladite clé de chiffrement symétrique ;
- désynchronisation 14 de la transmission desdites deux parties distinctes ;
- réutilisation 16 de ladite clé de chiffrement symétrique pour une pluralité d'ensembles de donnée(s) préalablement chiffrés distinctement en utilisant des clés distinctes de chiffrement d'origine.

Il est à noter que par « ensemble de donnée(s) » on entend que chaque ensemble comprend au moins une donnée.

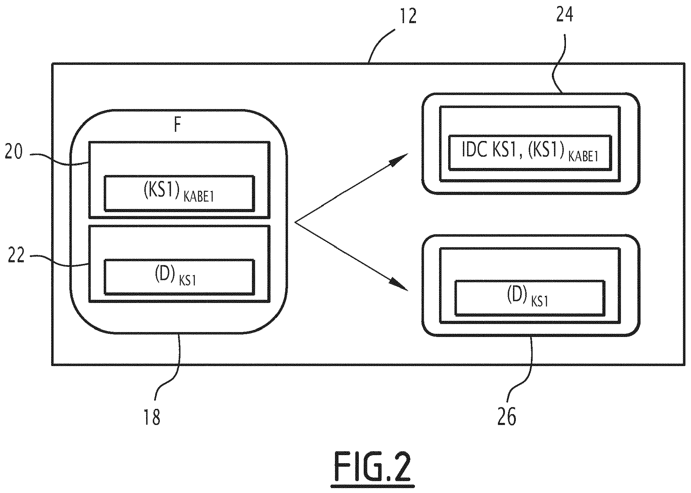

La figure 2 illustre plus précisément l'effet de la première étape 12 de séparation SEP du procédé d'adaptation dynamique du format de transmission d'un chiffrement de données basé sur les attributs de la figure 1.

Plus précisément, l'étape 12 de séparation SEP consiste à séparer (i.e. diviser en parties) un fichier F de données D préalablement chiffré via un chiffrement basé sur les attributs, notamment un chiffrement ABE tel que représenté sur la figure 2 et considéré dans la suite de la description. Un tel fichier F de données, chiffrées au préalable via un chiffrement basé sur les attributs tel que le chiffrement ABE, comprend classiquement, au sein du même ensemble correspondant au fichier F, une en-tête 20 ABE contenant une clé symétrique KS1 chiffrée par la clé ABE KABE1, et des données D chiffrées 22 par ladite clé KS1. Autrement dit, avant la séparation 12 mise en oeuvre selon la présente invention, l'en-tête 20 ABE et les données D chiffrées 22 forment un tout correspondant au fichier F, indissociables notamment lors de la transmission.

Lors de l'étape 12 selon la présente invention, l'ensemble du fichier F est séparé en deux parties distinctes 24 et 26 (i.e. propres à être transmises séparément), la première partie 24 comprenant une en-tête dudit ensemble de donnée(s) préalablement chiffré, l'en-tête correspondant au chiffrement basé sur les attributs de la clé de chiffrement symétrique KS1, et la seconde partie 26 comprenant lesdites données chiffrées avec ladite clé symétrique KS1.

De plus, tel qu'illustré sur l'exemple de la figure 2, l'étape de séparation comprend en outre l'association à chacune desdites deux parties distinctes 24 et 26 d'un identifiant commun IDC KS1 de ladite clé de chiffrement symétrique KS1 (IDC KS1 n'étant pas représenté au sein de la seconde partie 26). Un tel identifiant IDC KS1 est essentiel et permet, comme détaillé par la suite, au récepteur lors de la réception de faire le lien entre les deux parties distinctes 24 et 26. Autrement dit, un tel identifiant commun aux deux parties permet la séparation à l'émission et la reconstruction (i.e. le rassemblement) à la réception.

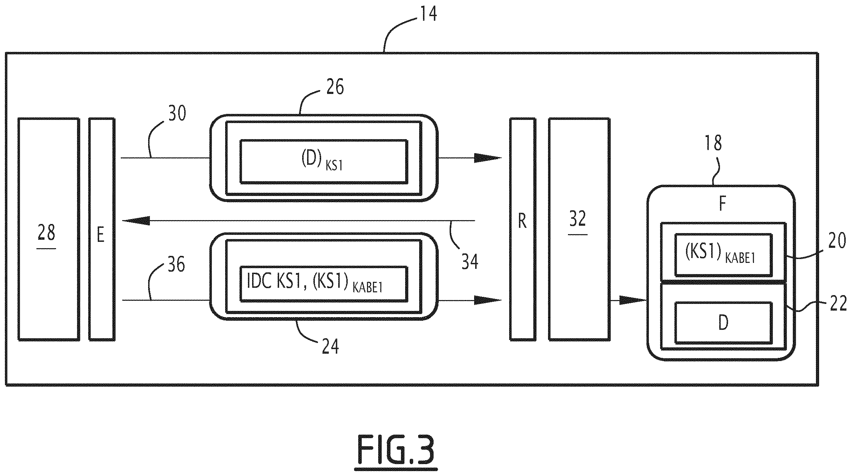

La figure 3 illustre plus précisément l'effet de la deuxième étape 14 de désynchronisation.

La désynchronisation 14 selon la présente invention consiste à transmettre séparément ladite première partie 24 de la seconde partie 26, à savoir, selon une première variante, transmettre ladite première partie 24 avant ou après ladite seconde partie 26.

Autrement dit, selon l'étape 14 l'envoi de la première partie 24 contenant la clé symétrique KS1 chiffrée par la clé ABE KABE1 et l'identifiant IDC KS1, est asynchrone de l'envoi de la seconde partie 26 comprenant lesdites données chiffrées au préalable avec ladite clé symétrique KS1 et également l'identifiant IDC KS1, ce qui revient selon la présente invention à utiliser deux canaux virtuels de transmission distincts, la première partie 24 pouvant être, du fait de la séparation 12 préalable, transmise complètement indépendamment des données chiffrées, l'identifiant IDC KS1 permettant de les lier à la réception.

Selon une seconde variante illustrée par la figure 3, la désynchronisation consiste à transmettre la première partie 24 sur requête du récepteur R.

Plus précisément, selon cette seconde variante, l'émetteur E met en oeuvre une désynchronisation 28 et transmet au récepteur R, selon la première flèche 30, la seconde partie 26 comprenant lesdites données chiffrées au préalable avec ladite clé symétrique KS1 et également l'identifiant IDC KS1.

Le récepteur R détecte alors, selon une étape 32, qu'il ne dispose pas encore côté réception de la partie 24 contenant l'en-tête associé via l'identifiant IDC KS1 à la partie données chiffrée 26 (i.e. l'en-tête ABE correspondant à l'identifiant IDC KS1), cette en-tête 24 étant nécessaire au récepteur R pour pouvoir ultérieurement déchiffrer (i.e. reconstruire) les données chiffrées de la seconde partie 26 une fois que l'en-tête 24 et la seconde partie 26 sont assemblées en un tout via la reconstruction du fichier F, et demande selon la flèche 34 son émission à l'émetteur E. A réception de cette requête 34, l'émetteur E transmet alors selon la flèche 36 la première partie 24 contenant l'en-tête associé via l'identifiant IDC KS1.

Le récepteur R est alors à même de reconstruire le fichier F d'origine utilisé comme point de départ de l'étape 12 de séparation tel qu'illustré précédemment par la figure 2, ce fichier F rassemblant en un tout 18 l'en-tête 20 ABE contenant une clé symétrique KS1 chiffrée par la clé ABE KABE1, et les données D chiffrées 22 par ladite clé KS1, l'en-tête 20 ABE permettant aux données D chiffrées 22 d'être déchiffrées, une fois le fichier F reconstruit.

Selon une autre variante, la désynchronisation consiste à transmettre la première partie 24 périodiquement, notamment si la communication émetteur-récepteur est unidirectionnelle.

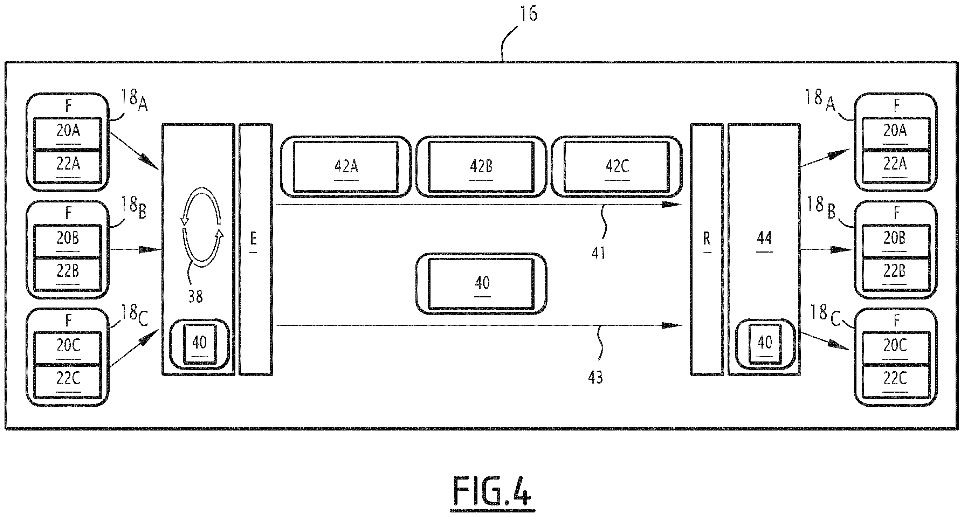

La figure 4 illustre plus précisément l'effet de la troisième étape 16 de réutilisation de la clé de chiffrement KS1 pour une pluralité d'ensembles de donnée(s) (un ensemble comprenant au moins une donnée) préalablement chiffrés distinctement. Le mécanisme de réutilisation selon la présente invention consiste à réutiliser la même clé symétrique pour plusieurs données, ce qui est rendu possible par le fait que l'ABE soit basé sur des attributs.

Selon l'exemple de la figure 4, trois ensembles de donnée(s) préalablement chiffrés distinctement avec des clés distinctes, correspondant aux fichiers F distincts 18_{A}, 18_{B}, et 18_{C}, sont représentés.

Plus précisément, préalablement à l'étape de séparation 12 précitée et illustrée en relation avec la figure 2, le fichier 18_{A} rassemble en un tout, l'en-tête ABE 20_{A} contenant une clé symétrique KSA chiffrée par une clé ABE KABE, et les données A chiffrées 22_{A} chiffrées par ladite clé KSA, de manière similaire, le fichier 18_{B} rassemble en un tout, l'en-tête ABE 20_{B} contenant une clé symétrique KSB chiffrée par la clé ABE KABE, et les données B chiffrées 22_{B} chiffrées par ladite clé KSB, et le fichier 18c rassemble en un tout, l'en-tête ABE 20_{C} contenant une clé symétrique KSC chiffrée par la clé ABE KABE, et les données C chiffrées 22_{c} chiffrées par ladite clé KSC.

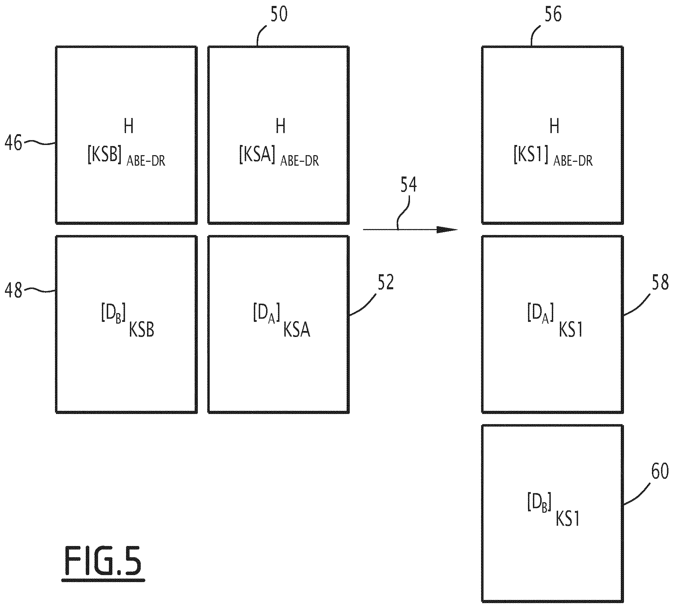

Selon une première variante, la réutilisation 16 de ladite clé de chiffrement symétrique pour une pluralité d'ensembles de donnée(s) préalablement chiffrés distinctement comprend un transchiffrement 38 de ladite pluralité d'ensembles de donnée(s) avec ladite clé de chiffrement symétrique. Un tel transchiffrement est illustré par la suite en relation avec la figure 5, et revient à chiffrer une seule fois la clé symétrique KS1 qui est utilisée pour chiffrer chaque ensemble de données préalablement déchiffré, à savoir les données A, les données B et les données C déchiffrées au lieu d'utiliser les clés KSA, KSB et KSC, ces clés étant des clés symétriques utilisées pour le chiffrement des données, propres à être renouvelées.

Un tel transchiffrement permet ensuite à l'issue de l'étape 12 donc de remplacer les en-têtes ABE 20_{A}, 20_{B}, et 20_{C} par une seule en-tête 40 commune, correspondant au chiffrement basé sur les attributs de la clé de chiffrement symétrique KS1 associé à l'identifiant IDC KS1, avec une nouvelle clé ABE KABE1 à la place de la clé ABE KABE utilisée pour les en-têtes ABE 20_{A}, 20_{B}, et 20_{C} précitées.

Une telle en-tête 40 est commune au données A, B et C qui sont respectivement chiffrées avec la clé symétrique KS1, et transmises lors de l'étape de désynchronisation 14, selon la flèche 41 illustrant un premier canal virtuel de transmission, sous la forme des parties de données 42A, 42B et 42C associées à (i.e. identifiées par) l'identifiant IDC KS1, tandis que ladite en-tête commune 40 est transmise séparément selon la flèche 43 illustrant un second canal virtuel de transmission.

Côté récepteur R, une reconstruction 44 des fichiers F est mise en oeuvre en utilisant l'en-tête commune 40 pour reformer les fichiers d'origine 18_{A}, 18_{B}, et 18_{C} à la différence près que du fait du transchiffrement côté émetteur E, les en-têtes ABE 20_{A}, 20_{B}, et 20_{C} côté récepteur R sont identiques et contiennent toutes la clé symétrique KS1 chiffrée par la clé ABE KABE1, et les données A, B et C sont chacune chiffrées avec la même clé KS1.

Selon un complément optionnel non représenté, ladite étape de transchiffrement comprend en outre une compression de données de ladite seconde partie 26, la compression étant mise en oeuvre sur les données déchiffrées préalablement à leur rechiffrement via la clé commune KS1. Une telle compression préalable à la transmission, associée à une décompression ultérieure lors de la réception, permet d'accroître l'optimisation de la taille des données protégées par chiffrement basé sur les attributs, notamment pour le transport sur un réseau contraint.

La figure 5 schématise à nouveau le transchiffrement. Plus précisément, deux ensembles de données préalablement chiffrés distinctement sont représentés à savoir d'une part un premier ensemble rassemblant en un tout l'en-tête H (de l'anglais *header*) 46 contenant la clé KSB chiffrée par la clé ABE-DR, et les données D_{B} chiffrées 48, chiffrées par ladite clé KSB, et d'autre part un deuxième ensemble rassemblant en un tout l'en-tête H (de l'anglais *header*) 50 contenant la clé KSA chiffrée par la clé ABE-DR, et les données D_{A} chiffrées 52, chiffrées par ladite clé KSA.

Le transchiffrement 54 consiste alors à chiffrer une seule fois la clé symétrique KS1 pour obtenir l'unique en-tête 56 H contenant la clé KS1 chiffrée par la clé ABE-DR qui est utilisée pour chiffrer chaque ensemble de données 58 et 60, à savoir respectivement les données A chiffrées par la clé KS1, et les données B chiffrées par la clé KS1.

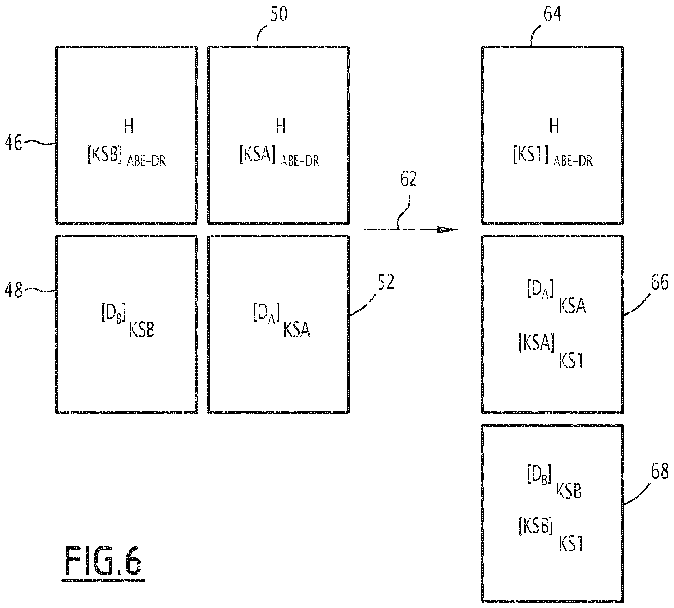

Selon une deuxième variante illustrée par la figure 6, la réutilisation de ladite clé de chiffrement symétrique pour une pluralité d'ensembles de donnée(s) préalablement chiffrés distinctement comprend :
- le chiffrement, avec ladite clé de chiffrement symétrique, de la clé de chiffrement d'origine associée à chaque ensemble de ladite pluralité d'ensembles de donnée(s) préalablement chiffrés distinctement en utilisant des clés distinctes de chiffrement d'origine ; et
- ajout de ladite clé de chiffrement d'origine chiffrée par ladite clé de chiffrement symétrique au sein de ladite seconde partie.

En reprenant les deux ensembles de données préalablement chiffrés distinctement de la figure 5 correspondant d'une part à un premier ensemble rassemblant en un tout l'en-tête H (de l'anglais *header*) 46 contenant la clé KSB chiffrée par la clé ABE-DR, et les données D_{B} chiffrées 48, chiffrées par ladite clé KSB, et d'autre part à un deuxième ensemble rassemblant en un tout l'en-tête H (de l'anglais *header*) 50 contenant la clé KSA chiffrée par la clé ABE-DR, et les données D_{A} chiffrées 52, chiffrées par ladite clé KSA, la deuxième variante 62 revient cette fois à obtenir l'unique en-tête 64 H contenant la clé KS1 chiffrée par la clé ABE-DR commun aux données A et B, et à chiffrer cette fois :
- pour les données A, la clé KSA avec la clé KS1 et à l'ajouter à l'ensemble 66 de donnée A,
- pour les données B, la clé KSB avec la clé KS1 et à l'ajouter à l'ensemble 68 de donnée B.

Une telle deuxième variante de réutilisation de la clé KS1 pour les deux ensembles de données 66 et 68 présente un overhead de l'ordre de 256bits seulement, ne nécessite pas de données utilisateur en clair ou d'opération de chiffrement/déchiffrement de données utilisateur au niveau des passerelles, et permet une conservation des clés KSA et KSB de bout en bout de l'émetteur E au récepteur R, ce qui n'est pas le cas sur l'exemple de la figure 4 basé sur le transchiffrement.

Selon la première ou la deuxième variante de réutilisation illustrées en relation avec les figures 4 à 6, la présente invention permet ainsi la mise en oeuvre d'un service de transposition du chiffrement de données basé sur les attributs, tel que l'ABE, pour les réseaux sous contraintes (i.e. réseaux contraints), un tel service impliquant avant émission : une gestion des en-têtes ABE relativement à leur durée d'utilisation, leur capacité de réémission, leur stockage temporaire selon les clés symétriques, etc., selon la première variante le transchiffrement des données avec les clés symétriques associées aux en-têtes, ou selon la deuxième variante le chiffrement de la clé symétrique d'origine, et impliquant après réception : la gestion des en-têtes ABE en termes de stockage temporaire pour permettre la reconstitution des données, un capacité de demander une en-tête ABE non présente à la réception d'une donnée, la reconstruction des fichiers en se basant sur les identifiants liant les données et les en-têtes ABE

En complément optionnel non représenté, le procédé comprend en outre une étape de renouvellement de ladite clé de chiffrement symétrique, ledit renouvellement étant propre à être :
- périodique, par exemple, de quelques heures à une journée selon le chiffreur utilisé et le contexte d'utilisation ;
- mis en oeuvre en fonction de la durée et/ou de la quantité de données à transmettre associée à ladite pluralité d'ensembles de donnée(s) préalablement chiffrés distinctement en utilisant des clés distinctes de chiffrement d'origine.

Un tel renouvellement étant effectué de manière transparente de bout en bout.

En complément optionnel non représenté, le procédé comprend en outre une étape préalable de surchiffrement desdites clés distinctes de chiffrement d'origine, notamment des clés d'origine asymétriques. Un tel surchiffrement optionnel permet de réduire les traitements de séparation 12 de l'en-tête, et nécessite une gestion avec double clés symétriques encapsulées.

De manière non représentée, le dispositif électronique d'adaptation dynamique du format de transmission d'un chiffrement de données basé sur les attributs, et propre à mettre en oeuvre le procédé selon la présente invention pour application à chaque ensemble de donnée(s) préalablement chiffré au moyen dudit chiffrement basé sur les attributs, comprend - un module de séparation configuré pour séparer ledit ensemble de donnée(s), préalablement chiffré, en deux parties distinctes comprend :
- une première partie comprenant une en-tête dudit ensemble de donnée(s) préalablement chiffré, l'en-tête correspondant au chiffrement basé sur les attributs d'une clé de chiffrement symétrique ;
- une seconde partie comprenant lesdites données chiffrées avec ladite clé symétrique ; ledit module de séparation étant en outre configuré pour associer à chacune desdites deux parties distinctes d'un identifiant commun de ladite clé de chiffrement symétrique ;
- un module de désynchronisation configuré pour désynchroniser la transmission desdites deux parties distinctes ;
- un module de réutilisation configuré pour réutiliser ladite clé de chiffrement symétrique pour une pluralité d'ensembles de donnée(s) préalablement chiffrés distinctement en utilisant des clés distinctes de chiffrement.

Selon une mise en oeuvre non représentée, un tel dispositif d'adaptation dynamique du format de transmission d'un chiffrement de données basé sur les attributs comprend une unité de traitement formée par exemple d'une mémoire et d'un processeur associé à la mémoire, et le dispositif d'adaptation dynamique du format de transmission d'un chiffrement de données basé sur les attributs est au moins en partie réalisé sous forme d'un logiciel, ou d'une brique logicielle, exécutable par le processeur, notamment le module de séparation, le module de désynchronisation, et le module de réutilisation. La mémoire du dispositif d'adaptation dynamique du format de transmission d'un chiffrement de données basé sur les attributs est alors apte à stocker de tels logiciels ou briques logicielles, et le processeur est alors apte à les exécuter.

Selon une autre mise en oeuvre également non représentée, le module de séparation, le module de désynchronisation, et le module de réutilisation sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Spécifie integrated Circuit*)*.*

Lorsqu'une partie du dispositif d'adaptation dynamique du format de transmission d'un chiffrement de données basé sur les attributs selon la présente invention est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention propose ainsi d'optimiser la taille des données protégées par un chiffrement basé sur les attributs, notamment par le chiffrement ABE précité, et permet du fait de l'adaptation dynamique de format avant transmission de réduire la taille des données transmises par rapport à la taille des données initiales chiffrées au préalable avec un chiffrement basé sur les attributs, notamment par le chiffrement ABE, et ce sans modifier le contenu des données à protéger.

La présente invention permet une mise en oeuvre sous la forme d'un service, pouvant être instancié aux points d'accès aux réseaux contraints tels que des passerelles réseau applicatives.

De plus, la solution selon la présente invention permet de réduire les frais généraux (i.e. « l'overhead » en anglais) de sécurité lié à la protection par chiffrement basé sur les attributs, notamment par le chiffrement ABE, des données transmises pendant la phase de transmission.

Par ailleurs, la solution selon la présente invention permet de garder les propriétés du chiffrement basé sur les attributs, notamment le chiffrement ABE, dans son usage selon l'approche de sécurité centrée sur les données DCS, et s'avère très efficace sur les données de petites tailles qui sont les plus impactées par l'expansion de taille lors de la mise en oeuvre classique du chiffrement basé sur les attributs, tel que l'ABE.

De plus, la mise en oeuvre de la présente invention est compatible avec un fonctionnement selon des modes de diffusion point à point et point à multipoint, sur des liaisons simplex, half-duplex ou full-duplex, et ce tout en étant indépendante du moyen de transmission.

En outre, côté réception la présente invention permet une reconstruction simple des données sans introduire de contrainte additionnelle de sécurité cryptographique.

## Revendications

1. Procédé (10) d'adaptation dynamique du format de transmission d'un chiffrement de données basé sur les attributs, le procédé étant mis en oeuvre par un dispositif électronique d'adaptation dynamique du format de transmission d'un chiffrement de données basé sur les attributs, et comprenant les étapes suivantes à appliquer à chaque ensemble de donnée(s) préalablement chiffré au moyen dudit chiffrement basé sur les attributs :
- séparation (12) dudit ensemble de donnée(s), préalablement chiffré, en deux parties distinctes comprenant :
- une première partie comprenant une en-tête dudit ensemble de donnée(s) préalablement chiffré, l'en-tête correspondant au chiffrement basé sur les attributs d'une clé de chiffrement symétrique ;
- une seconde partie comprenant lesdites données chiffrées avec ladite clé symétrique ; ladite séparation comprenant en outre l'association à chacune desdites deux parties distinctes d'un identifiant commun de ladite clé de chiffrement symétrique ;
- désynchronisation (14) de la transmission desdites deux parties distinctes ;
- réutilisation (16) de ladite clé de chiffrement symétrique pour une pluralité d'ensembles de donnée(s) préalablement chiffrés distinctement en utilisant des clés distinctes de chiffrement d'origine.

2. Procédé selon la revendication 1, dans lequel ledit chiffrement de données basé sur les attributs est un chiffrement ABE.

3. Procédé selon la revendication 1 ou 2 dans lequel ladite désynchronisation consiste à transmettre séparément ladite première partie :
- avant ou après ladite seconde partie ; ou
- sur requête d'un récepteur; ou
- périodiquement.

4. Procédé selon l'une quelconque des revendications précédentes, dans lequel la réutilisation de ladite clé de chiffrement symétrique pour une pluralité d'ensembles de donnée(s) préalablement chiffrés distinctement comprend un transchiffrement de ladite pluralité d'ensembles de donnée(s) avec ladite clé de chiffrement symétrique.

5. Procédé selon la revendication 4, dans lequel ladite étape de transchiffrement comprend en outre une compression de données de ladite seconde partie.

6. Procédé selon l'une quelconque des revendications 1 à 3, dans lequel la réutilisation de ladite clé de chiffrement symétrique pour une pluralité d'ensembles de donnée(s) préalablement chiffrés distinctement comprend :
- le chiffrement, avec ladite clé de chiffrement symétrique, de la clé de chiffrement d'origine associée à chaque ensemble de ladite pluralité d'ensembles de donnée(s) préalablement chiffrés distinctement en utilisant des clés distinctes de chiffrement d'origine ; et
- ajout de ladite clé de chiffrement d'origine chiffrée par ladite clé de chiffrement symétrique au sein de ladite seconde partie.

7. Procédé selon l'une quelconque des revendications précédentes, comprenant en outre une étape de renouvellement de ladite clé de chiffrement symétrique, ledit renouvellement étant propre à être :
- périodique ;
- mis en oeuvre en fonction de la durée et/ou de la quantité de données à transmettre associée à ladite pluralité d'ensembles de donnée(s) préalablement chiffrés distinctement en utilisant des clés distinctes de chiffrement d'origine.

8. Procédé selon l'une quelconque des revendications précédentes, comprenant en outre une étape préalable de surchiffrement desdites clés distinctes de chiffrement d'origine.

9. Programme d'ordinateur comportant des instructions logicielles qui, lorsqu'elles sont exécutées par un ordinateur mettent en oeuvre un procédé d'adaptation dynamique du format de transmission d'un chiffrement de données basé sur les attributs selon l'une quelconque des revendications précédentes.

10. Dispositif électronique d'adaptation dynamique du format de transmission d'un chiffrement de données basé sur les attributs, et pour application à chaque ensemble de donnée(s) préalablement chiffré au moyen dudit chiffrement basé sur les attributs, comprenant :
- un module de séparation configuré pour séparer ledit ensemble de donnée(s), préalablement chiffré, en deux parties distinctes comprenant :
- une première partie comprenant une en-tête dudit ensemble de donnée(s) préalablement chiffré, l'en-tête correspondant au chiffrement basé sur les attributs d'une clé de chiffrement symétrique ;
- une seconde partie comprenant lesdites données chiffrées avec ladite clé symétrique; ledit module de séparation étant en outre configuré pour associer à chacune desdites deux parties distinctes d'un identifiant commun de ladite clé de chiffrement symétrique ;
- un module de désynchronisation configuré pour désynchroniser la transmission desdites deux parties distinctes ;
- un module de réutilisation configuré pour réutiliser ladite clé de chiffrement symétrique pour une pluralité d'ensembles de donnée(s) préalablement chiffrés distinctement en utilisant des clés distinctes de chiffrement.
